# EUROPÄISCHE PATENTSCHRIFT

(11) **EP 2 758 886 B1**
(45) Veröffentlichungstag und Bekanntmachung des Hinweises auf die Patenterteilung: **02.01.2019**
(21) Anmeldenummer: 12762279.3
(22) Anmeldetag: 20.09.2012
(51) Int. Cl.: G06F 9/50, G06F 13/00, G06F 9/26, G06F 11/18, G06F 13/364, G06F 13/24

(54) **ZUGANGSSTEUERUNG ZU EINEM GEMEINSAM EXKLUSIV NUTZBAREN ÜBERTRAGUNGSMEDIUM**
CONTROL OF ACCESS TO A JOINTLY EXCLUSIVELY USABLE TRANSMISSION
COMMANDE D'ACCÈS À UN SUPPORT DE TRANSMISSION À UTILISATION EXCLUSIVE EN COMMUN

(30) Priorität: 23.09.2011 DE 102011114378
(43) Veröffentlichungstag der Anmeldung: 30.07.2014
(73) Patentinhaber: Airbus Defence and Space GmbH, 85521 Ottobrunn (DE)
(72) Erfinder: PAULITSCH, Michael, 85521 Ottobrunn (DE); NOWOTSCH, Jan, 82008 Unterhaching (DE)
(74) Vertreter: LKGLOBAL Lorenz & Kopf PartG mbB Patentanwälte
(86) Internationale Anmeldenummer: PCT/EP2012/068518
(87) Internationale Veröffentlichungsnummer: WO 2013/041612

(56) Entgegenhaltungen:
- WO-A2-2004/036371
- WO-A2-2004/097564
- US-A1- 2002 110 084
- US-A1- 2010 115 167
- BETTISON A ET AL: "LIMITS-a system for UNIX resource administration", PROCEEDINGS OF THE SUPERCOMPUTING CONFERENCE. RENO, NOV. 13 - 17, 1989, NEW YORK, IEEE, US, 12. November 1989 (1989-11-12), Seiten 686-692, XP031577340, ISBN: 978-0-89791-341-6

## Beschreibung

### GEBIET DER ERFINDUNG

Die Erfindung betrifft die Zugangssteuerung zu einem von mehreren Komponenten exklusiv gemeinsam genutzten Übertragungsmedium. Insbesondere betrifft die Erfindung ein Rechensystem mit einer Vielzahl von Komponenten, welche eine Ressource exklusiv gemeinsam nutzen, ein Luftfahrzeug mit einem solchen Rechensystem, ein Verfahren zum Beeinflussen der exklusiven Zuweisung einer gemeinsam genutzten Ressource in einem Rechensystem an eine Komponente einer Vielzahl von Komponenten, welche ausgeführt sind, die Ressource zu nutzen, ein Computerprogrammelement zur Steuerung eines Rechensystems, sowie ein computerlesbares Medium mit einem solchen Computerprogrammelement.

### TECHNISCHER HINTERGRUND DER ERFINDUNG

Ein Verbund von Rechnerelementen basiert üblicherweise auf einer Architektur, gemäß welcher die einzelnen Rechnerelemente an ein Übertragungsmedium angeschlossen sind, über welches die Rechnerelemente Daten austauschen können und welches die Rechnerelemente exklusiv gemeinsam nutzen. Dies bedeutet, dass jedes einzelne Rechnerelement das Übertragungsmedium nutzen kann, wobei zu einem gegebenen Zeitpunkt lediglich ein Rechnerelement das Übertragungsmedium nutzen kann. Ist das Übertragungsmedium so ausgeführt, dass es eine Mehrzahl von Übertragungskanälen zur Verfügung stellt, kann jeweils ein Übertragungskanal von einem Rechnerelement genutzt werden. In diesem Fall kann das Übertragungsmedium mit der Mehrzahl von Übertragungskanälen von mehreren Rechnerelementen gleichzeitig genutzt werden, wobei aber ein einzelner Übertragungskanal zu einem bestimmten Zeitpunkt nur von einem Rechnerelement genutzt werden kann.

### Hilfsantrag 2

Damit ist es erforderlich, über eine sog. Zuweisungsstrategie das Übergangsmedium an jeweils ein Rechnerelement zuzuweisen, welches Rechnerelement dann das Übertragungsmedium exklusiv nutzen kann. Sobald das Rechnerelement, welchem das Übertragungsmedium zugewiesen ist, seine Übertragung beendet hat, wird das Übertragungsmedium zur Zuweisung an ein anderes oder an das gleiche Rechnerelement freigegeben.

Diese grundsätzliche Architektur findet sich beispielsweise bei der Vernetzung von einzelnen Rechnern bzw. Computern über ein Computernetzwerk (sog. Makrostruktur) als auch bei der Vernetzung von Komponenten, welche sich intern in einem Rechner befinden, beispielsweise auf einem Prozessor eines Rechners (sog. Mikrostruktur).

Je nach Anwendungsgebiet gibt es eine Vielzahl von Zuweisungsstrategien für die Zuweisung des Übertragungsmediums an ein Rechnerelement, wobei die Ausgestaltung der Zuweisungsstrategie im Wesentlichen von den externen Auflagen an das Kommunikationsverhalten und die Kommunikationsbedürfnisse der Rechnerelemente vorgegeben wird.

DE 10 2009 046 062 B3 zeigt eine Vorrichtung und ein Verfahren zur Übertragung von Daten über Netzwerkknoten eines Netzwerkes, wobei eine Mehrzahl von Netzwerkknoten über einen Datenübertragungsbus mit einer Sendeleitung und einer Empfangsleitung Daten übertragen kann. Hierbei wird der Datenübertragungsbus von einem Netzwerkknoten zu einem Zeitpunkt genutzt und kann aber nacheinander an verschiedene Netzwerkknoten vergeben bzw. diesen zugewiesen werden.

WO 2004/097564 A1 beschreibt ein Verfahren, die von einem Client genutzte Bandbreite in einem Netzwerk zu steuern. Dabei wird durch einen Server der Nutzungsumfang durch den Client überwacht und wenn ein festgelegter Grenzwert erreicht wird, wird eine Aktion eingeleitet. Die Aktion kann z.B. sein, dass dem Hilfsantrag 2

Client eine Nachricht "try again later" übertragen wird, dass dem Client eine im Umfang reduzierte Nachricht übertragen wird, oder dass die Anfrage des Clients an einen anderen Server umgeleitet wird.

US 2010/115167 A1 beschreibt einen Zuweisungsmechanismus, welcher nach einer bestimmten Metrik und Zuweisungspolitik arbeitet. Die Kriterien für die Zuweisung der gemeinsam genutzten Ressource an die Recheneinheiten sind die genutzte Bandbreite und ein Vergleich mit einem Schwellwert, so dass der Zugang zu der gemeinsam genutzten Ressource im Konfliktfall (d.h. wenn mehrere Recheneinheiten gleichzeitig auf die gemeinsam genutzte Ressource zugreifen wollen) nur dann vergeben wird, wenn der Schwellwert nicht erreicht ist. Selbst bei Erreichen des Schwellwertes kann der Zugang gewährt werden, wenn keine andere Recheneinheit Zugang verlangt.

### ZUSAMMENFASSUNG DER ERFINDUNG

Es kann als eine Aufgabe der Erfindung angesehen werden, die Zuweisung einer exklusiv gemeinsam genutzten Ressource an eine Komponente einer Vielzahl von Komponenten bei einer beliebigen festgesetzten Zuweisungsstrategie zu beeinflussen.

Es ist ein Rechensystem, ein Luftfahrzeug, ein Verfahren, ein Computerprogrammelement und ein computerlesbares Medium gemäß den Merkmalen der unabhängigen Patentansprüche angegeben. Weiterbildungen der Erfindung ergeben sich aus den Unteransprüchen und aus der folgenden Beschreibung.

Viele der im Folgenden im Hinblick auf das Rechensystem beschriebenen Merkmale lassen sich auch als Verfahrensschritte implementieren und umgekehrt.

Gemäß einem ersten Aspekt der Erfindung ist ein Rechensystem mit einer Vielzahl von Komponenten, welche ein Übertragungsmedium exklusiv gemeinsam nutzen, angegeben, welches eine Aktivitätsüberwachungseinheit und eine Unterbrechungseinheit aufweist. Jede einzelne Komponente ist ausgeführt, das Übertragungsmedium zu nutzen, wobei zu einem gegebenen Zeitpunkt lediglich eine Komponente das Übertragungsmedium nutzen kann, wobei das Rechensystem ausgeführt ist, eine Zuweisungsstrategie auszuführen, welche das Übertragungsmedium an eine Komponente zuweist. Die Aktivitätsüberwachungseinheit ist ausgeführt, eine Anzahl von Aktivitäten einer Komponente auf dem Übertragungsmedium zu erfassen. Die Unterbrechungseinheit ist ausgeführt, die Nutzung des Übertragungsmediums durch eine das Übertragungsmedium nutzende Komponente zu unterbrechen, wenn die Anzahl der Aktivitäten der Komponente einen Aktivitätsgrenzwert erreicht, so dass eine Zuweisungsstrategie das exklusiv gemeinsam genutzte Übertragungsmedium einer anderen Komponente zuweisen kann. Die Zuweisungsstrategie ist ausgeführt, zu erkennen, dass das Übertragungsmedium nicht genutzt ist, wenn die Nutzung des Übertragungsmediums durch eine Komponente unterbrochen ist, und das Übertragungsmedium einer derjenigen Komponenten zur Nutzung zuzuweisen, welche das Übertragungsmedium nutzen wollen. Im Fortgang der Beschreibung wird das Übertragungsmedium auch als Ressource bezeichnet.

Die Aktivitätsüberwachungseinheit kann beispielsweise jede einzelne Nutzung der Ressource durch die Komponente erfassen. Bei der Nutzung der Ressource kann es sich beispielsweise um das Übertragen eines Datenpakets über die Ressource handeln.

Für jede Komponente der Vielzahl von Komponenten ist ein Aktivitätsgrenzwert angegeben, welcher bewirkt, dass der Zugang der entsprechenden Komponente zur Nutzung der Ressource unterbrochen wird, wenn die Anzahl der erfassten Aktivitäten der Komponente diesen Aktivitätsgrenzwert erreicht.

Sobald der Zugang einer Komponente zur Nutzung der Ressource unterbrochen ist, wird die Zuweisungsstrategie der Ressource an eine Komponente erkennen, dass die Ressource nicht genutzt ist und wird die Ressource einer derjenigen Komponenten zur Nutzung zuweisen, welche die Ressource nutzen wollen.

Damit wird ermöglicht, dass eine Komponente von der Nutzung der Ressource abgehalten wird bzw. die Nutzung der Ressource durch die Komponente beendet wird, so dass die Zuweisungsstrategie die Nutzung der Ressource an eine andere Komponente zuweisen kann. Insbesondere wird dadurch ermöglicht, das Verhalten einer beliebigen festgesetzten Zuweisungsstrategie zu beeinflussen, auch wenn das Verhalten und die Mechanismen der Zuweisungsstrategie nicht bekannt sind. Dadurch, dass eine Komponente, deren Anzahl von Aktivitäten auf der Ressource den entsprechenden Aktivitätsgrenzwert erreicht hat, wird die Komponente von der Nutzung der Ressource abgehalten und die Zuweisungsstrategie wird in die Lage versetzt, die Ressource an eine andere Komponente zuzuweisen.

In anderen Worten bedeutet dies, dass es der Zuweisungsstrategie der Ressource an eine Komponente ermöglicht wird, die Ressource zur Nutzung durch eine andere Komponente zuzuweisen, indem eine die Ressource nutzende Komponente von der Nutzung abgehalten wird. Insbesondere bei einem nicht bekannten Verhalten und nicht bekannten Funktionsprinzipien der Zuweisungsstrategie wird damit ermöglicht, eine auf deterministischen Prinzipien basierende Zuweisung der Ressource an die Komponenten vorzunehmen.

Erfolgt also im Falle einer beliebig lang andauernden Nutzung der Ressource durch eine Komponente durch die Zuweisungsstrategie keine Neuzuweisung der Ressource an eine andere Komponente, welche die Ressource ebenfalls nutzen möchte, so kann diese Neuzuweisung dadurch erzwungen werden, dass eine die Ressource nutzende Komponente von der Nutzung der Ressource ausgeschlossen wird, wenn die Anzahl der Aktivitäten der nutzenden Komponente den für diese Komponente gesetzten Aktivitätsgrenzwert erreicht. Sobald also eine nutzende Komponente von der Nutzung der Ressource ausgeschlossen wird, wird die Zuweisungsstrategie die Ressource einer anderen wartenden Komponente zuweisen, obwohl die ursprünglich nutzende Komponente die Ressource auch weiterhin genutzt hätte.

Dies bedeutet, dass die Zuweisung der Ressource zu einer Komponente lediglich mittelbar beeinflusst wird, indem eine nutzende Komponente bei Erreichen des Aktivitätsgrenzwertes von der Nutzung ausgeschlossen wird. Die Neuzuweisung der Nutzung der Ressource erfolgt damit nicht unmittelbar durch Einfluss bzw. Veränderung der Zuweisungsstrategie, sondern mittelbar durch Unterbrechung der Nutzung der Ressource durch die nutzende Komponente.

Der Aktivitätsgrenzwert kann für jede Komponente der Vielzahl von Komponenten gleich sein, er kann aber auch für jede Komponente individuell angepasst sein. Ebenso kann der Aktivitätsgrenzwert vor Inbetriebnahme des Rechensystems festgesetzt werden oder aber sich während der Betriebszeit des Rechensystems verändern.

Selbstverständlich kann eine gerade von der Nutzung der Ressource ausgeschlossene Komponente in einem folgenden Vergabezyklus der Ressource an eine Komponente die Nutzung der Ressource sofort wieder erhalten, beispielsweise wenn keine andere Komponente die Ressource nutzen möchte. Aber auch in dem Fall, dass mehrere Komponenten die Ressource nutzen möchten, kann es dazu kommen, dass die Zuweisungsstrategie die Ressource in dem folgenden Vergabezyklus erneut derjenigen Komponente zuweist, welche gerade von der Nutzung der Ressource ausgeschlossen wurde. Eine von der Nutzung ausgeschlossene Komponente kann aber auch für eine Anzahl von Vergabezyklen von der Nutzung der Ressource ausgeschlossen sein.

Unter dem Begriff Vergabezyklus wird im Zusammenhang mit dieser Anmeldung der Vorgang verstanden, dass einer Komponente, welche die Ressource nutzt, der Zugang zu der Ressource versagt wird, so dass die Ressource neuerlich vergeben wird, wobei die Vergabe der Ressource durch die Zuweisungsstrategie erfolgt.

Ein neuer Vergabezyklus der Ressource an eine Komponente beginnt jeweils dann, wenn die nutzende Ressource mit der Anzahl ihrer Aktivitäten den entsprechenden Aktivitätsgrenzwert erreicht hat. Welche Komponente in dem nächsten Vergabezyklus die Ressource nutzen darf, wird durch die Zuweisungsstrategie festgelegt. Das Unterbrechen einer Komponente von der Nutzung der Ressource ermöglicht es der Zuweisungsstrategie lediglich, die Ressource einer anderen Komponente zur Nutzung zuzuweisen, erzwingt die Zuweisung an eine andere Komponente allerdings nicht, da die Zuweisungsstrategie in der Zuweisung der Ressource im nächsten Vergabezyklus entsprechend den internen Funktionen und Vergabemechanismen der Zuweisungsstrategie erfolgt.

Bei dem Rechensystem kann es sich beispielsweise um einen Verbund einer Vielzahl von Einzelrechnern bzw. Computern handeln, welche zum gegenseitigen Datenaustausch über ein Netzwerk miteinander verbunden sind. Es kann sich aber auch um eine jegliche Verbindung von Rechnerkomponenten handeln, welche zum Datenaustausch auf ein gemeinsames Übertragungsmedium zugreifen, beispielsweise eine Mehrzahl von Datenspeichern in einem Rechner, welche die Daten über einen gemeinsamen Datenbus erhalten oder senden.

In einer Ausführungsform können die die Ressource nutzenden Komponenten insbesondere ausgeführt sein, bei einem Ausschluss von der Nutzung der Ressource oder nach einer Unterbrechung der Nutzung der Ressource keine Anfragen zur Nutzung der Ressource zu stellen. Insbesondere können die von der Nutzung der Ressource ausgeschlossenen Komponenten ausgeführt sein, bis zu dem Beginn eines neuen Vergabezyklus keine Anfragen zur Nutzung der Ressource zu stellen.

Gemäß einer Ausführungsform der Erfindung ist das Rechensystem ein Mehrkernprozessor.

Gemäß einer weiteren Ausführungsform der Erfindung ist wenigstens eine Komponente ein Prozessorkern des Mehrkernprozessors.

Dabei handelt es sich bei den Komponenten beispielsweise um die einzelnen Prozessorkerne, von welchen der Mehrkernprozessor eine Vielzahl aufweist. Die Vielzahl von Prozessorkernen ist dabei über ein Bussystem bzw. einen prozessorinternen Bus so verbunden, dass die Prozessorkerne Daten beispielsweise mit einem Speicher und mit Eingabe-/Ausgabeelementen austauschen können.

Der prozessorinterne Bus wird nach einer herstellerspezifischen Zuweisungsstrategie jeweils an einen Prozessorkern zugewiesen. Für den Fall, dass die Zuweisung des prozessorinternen Busses an einen der Prozessorkerne angepasst bzw. gesteuert werden muss, was sich aus den fachlichen Anforderungen des Einsatzgebietes des Rechensystems ergeben kann, kann eine Neuzuweisung des Bussystems an einen der Prozessorkerne dadurch erzwungen werden, dass ein das Bussystem nutzender Prozessorkern zunächst von der Nutzung des Bussystems ausgeschlossen wird, so dass die Zuweisungsstrategie eine Neuzuweisung vornehmen kann.

Der Mehrkernprozessor kann selbstverständlich eine beliebige Anzahl an Prozessorkernen aufweisen.

Gemäß einer weiteren Ausführungsform der Erfindung ist wenigstens eine Komponente eine Eingabe-/Ausgabeeinheit des Mehrkernprozessors.

Die Eingabe-/Ausgabeeinheit ist dabei ausgeführt, zur Datenübertragung ebenfalls das prozessorinterne Bussystem zu nutzen, womit diese Einheiten ebenfalls zur Nutzung des Bussystems durch die Zuweisungsstrategie zugewiesen werden.

Bei der Eingabe-/Ausgabeeinheit kann es sich um jegliche Einheiten handeln, über welche der Mehrkernprozessor einen Datenaustausch, d. h. Datenempfang und/oder Datenversand, mit seiner Umgebung vornimmt.

Gemäß einer weiteren Ausführungsform der Erfindung weist die Aktivitätsüberwachungseinheit eine erste Gruppe von Speicherzellen auf, wobei jeweils eine Speicherzelle der ersten Gruppe ausgeführt ist, die Anzahl von Aktivitäten von jeweils einer Komponente der Vielzahl von Komponenten aufzunehmen.

Dabei ist die Aktivitätsüberwachungseinheit ausgeführt, einen Wert, welcher in der Speicherzelle hinterlegt ist, die derjenigen Komponente zugewiesen ist, welche die Ressource gerade nutzt, mit jeder Aktivität der Komponente auf der Ressource beispielsweise um jeweils den Wert 1 zu erhöhen.

Die Aktivitätsüberwachungseinheit kann aber ebenso nur eine einzelne Speicherzelle aufweisen, welche ausgeführt ist, die Anzahl der Aktivitäten derjenigen Komponente aufzunehmen, welche gerade die Ressource nutzt. Bei jeder Neuzuweisung der Ressource an eine Komponente wird dann der Wert der einen Speicherzelle, welche die Anzahl der Aktivitäten der gerade aktiven Komponente aufnimmt, auf einen Ausgangswert, beispielsweise 0, zurückgesetzt.

Gemäß einer weiteren Ausführungsform der Erfindung weist die Aktivitätsüberwachungseinheit eine zweite Gruppe von Speicherzellen auf, wobei jeweils eine Speicherzelle der zweiten Gruppe ausgeführt ist, den Aktivitätsgrenzwert von jeweils einer Komponente der Vielzahl von Komponenten aufzunehmen.

Die zweite Gruppe von Speicherzellen dient dem Vergleich der Aktivitätsanzahl der nutzenden Komponente mit dem zulässigen Aktivitätsgrenzwert. Erst wenn die Aktivitätsanzahl der die Ressource nutzenden Komponente den Aktivitätsgrenzwert erreicht hat, wird die Komponente von der Nutzung der Ressource ausgeschlossen.

Für den Fall, dass alle Komponenten den gleichen Aktivitätsgrenzwert haben, kann die zweite Gruppe auch aus einer einzelnen Speicherzelle bestehen, welche den gemeinsamen Aktivitätsgrenzwert aller Komponenten beinhaltet.

Damit kann die Aktivitätsüberwachungseinheit beispielsweise eine erste Speicherzelle für die Aktivitätsanzahl der nutzenden Komponente und eine zweite Speicherzelle für den Aktivitätsgrenzwert aller Komponenten aufweisen, wobei die erste Speicherzelle in jedem Vergabezyklus auf einen Ausgangswert zurückgesetzt wird und ein zweiter Vergabezyklus der Ressource initiiert wird, wenn die Aktivitätsanzahl der nutzenden Komponente den Aktivitätsgrenzwert erreicht.

Gemäß einem weiteren Aspekt der Erfindung ist ein Luftfahrzeug mit einem Rechensystem wie oben und im Folgenden beschrieben angegeben, wobei das Rechensystem ausgeführt ist, deterministisch abzuarbeitende Funktionen durchzuführen.

Insbesondere kann das Rechensystem in dem Luftfahrzeug ausgeführt sein, eine Vielzahl von Vorgängen durchzuführen, wie beispielsweise die Übertragung von Sensorsignalen, Steuerungsinformationen, Multimediainformationen und weiteren beliebigen über ein Übertragungsmedium zu übertragenden Daten.

Jeder dieser Rechenvorgänge kann dabei auf einer Komponente des Rechensystems ausgeführt werden, es können aber auch mehrere Rechenvorgänge auf einer Komponente ausgeführt werden. Dabei kann ein Aktivitätsgrenzwert einer einzelnen Komponente oder aber auch einem jeden Rechenvorgang zugewiesen werden.

Insbesondere bei der Verwendung in Luftfahrzeugen oder in anderen sicherheitskritischen Umgebungen kann es erforderlich sein, eine exklusiv gemeinsam genutzte Ressource, wie beispielsweise eine Netzwerkverbindung oder einen Datenübertragungsbus, nach einer definierten Anzahl von Aktionen erneut zur Zuweisung an eine die Ressource nutzende Komponente verfügbar zu haben. Durch Unterbrechen der Nutzung der Ressource durch eine Komponente wird es der Zuweisungsstrategie ermöglicht bzw. wird die Zuweisungsstrategie dazu gebracht, die Ressource erneut zuzuweisen.

Damit ist vorhersagbar, nach wie vielen Aktivitäten die gemeinsam genutzte Ressource für eine erneute Zuweisung zur Verfügung stehen wird, so dass eine beliebige Zuweisungsstrategie genutzt werden kann und dennoch eine deterministische Abarbeitung der Rechenvorgänge auf den einzelnen Komponenten ermöglicht wird.

Insbesondere bei der Verwendung von handelsüblichen Mehrkernprozessoren steht es dem Verwender eines solchen Mehrkernprozessors nicht frei, über die Zuweisung des prozessorinternen Bussystems an einen Prozessorkern zu entscheiden bzw. die Zuweisungsstrategie des Bussystems zu beeinflussen, so dass mittels der oben und im Folgenden beschriebenen Vorrichtung bzw. Rechensystems auf einem handelsüblichen Prozessor mit unbekannter Zuweisungsstrategie eine deterministische Zuweisung des prozessorinternen Bussystems an die Prozessorkerne ermöglicht werden kann.

Gemäß einem weiteren Aspekt der Erfindung ist ein Verfahren zum Beeinflussen der exklusiven Zuweisung eines gemeinsam genutzten Übertragungsmediums in einem Rechensystem an eine Komponente einer Vielzahl von Komponenten oder einen Rechenvorgang, welche ausgeführt sind, das Übertragungsmedium zu nutzen, angegeben, wobei die Zuweisung des Übertragungsmediums an die Komponente oder den Rechenvorgang nach einer beliebigen festgelegten Zuweisungsstrategie in dem Rechensystem erfolgt. Das Verfahren weist dabei die folgenden Schritte auf: Festlegen eines Aktivitätsgrenzwertes, welcher die maximale Anzahl von Aktivitäten der Komponente oder des Rechenvorgangs auf dem gemeinsam genutzten Übertragungsmedium angibt, Überwachen einer Anzahl von Aktivitäten der Komponente oder des Rechenvorgangs auf dem gemeinsam genutzten Übertragungsmedium, Unterbrechen der Nutzung des Übertragungsmediums durch eine das Übertragungsmedium nutzende Komponente oder Rechenvorgang, wenn die Anzahl der Aktivitäten den festgelegten Aktivitätsgrenzwert erreicht hat, so dass die Zuweisungsstrategie das gemeinsam genutzte Übertragungsmedium einer anderen Komponente oder einem anderen Rechenvorgang zuweisen kann, Erkennen, durch die Zuweisungsstrategie, dass das Übertragungsmedium nicht genutzt ist, wenn die Nutzung des Übertragungsmediums durch eine Komponente unterbrochen wurde, und Zuweisen des Übertragungsmediums zur Nutzung durch eine derjenigen Komponenten, welche das Übertragungsmedium nutzen wollen.

Die oben und im Folgenden dargelegten Ausführungen des Verfahrens zu der Komponente gelten analog auch für einen Rechenvorgang. Unter einem Rechenvorgang kann dabei beispielsweise ein auf einem Rechner abzuarbeitender Prozess oder ein Block von Anweisungen verstanden werden.

Das Sperren des Zugangs der Komponente zu der gemeinsam genutzten Ressource kann beispielsweise dadurch erfolgen, dass von der Überwachungseinheit bei Erreichen des Aktivitätsgrenzwertes ein sog. Interruptsignal an ein Betriebssystem abgesetzt wird, und das Betriebssystem die Ausführung eines Rechenvorgangs auf der Komponente, beispielsweise einem Prozessorkern eines Mehrkernprozessors oder einen Rechenvorgang auf einem Prozessorkern, stoppt, womit ein Bussystem von dem entsprechenden Prozessorkern nicht mehr genutzt wird und für eine erneute Zuweisung verfügbar wird.

Gemäß einer Ausführungsform der Erfindung erfolgt das Festlegen des Aktivitätsgrenzwertes für jede Komponente auf einen gleichbleibenden Wert.

Dabei kann der Aktivitätsgrenzwert für jede Komponente gleich sein oder aber auch für jede Komponente einen individuell eingestellten unterschiedlichen Wert annehmen.

Der Aktivitätsgrenzwert für die Komponenten wird dabei beispielsweise vor einer Betriebszeit eines Rechensystems festgelegt und bleibt während der gesamten Betriebszeit gleich.

Gemäß einer weiteren Ausführungsform der Erfindung erfolgt das Festlegen des Aktivitätsgrenzwertes für jede Komponente in Abhängigkeit von schwankenden äußeren Parametern, wobei der Aktivitätsgrenzwert während der Durchführung des Verfahrens variieren kann.

Dies ermöglicht beispielsweise bei Einsatz des Verfahrens in einem Rechensystem in einem Luftfahrzeug, dass die Aktivitätsgrenzwerte für jede Komponente beispielsweise in Abhängigkeit einer Flugphase, wie z. B. Start, Reiseflugphase oder Landung, sowie anderer externer Faktoren, wie z. B. Wetterlage, variiert werden kann. Selbstverständlich kann der Aktivitätsgrenzwert automatisch oder durch manuelle Eingabe variiert werden.

Gemäß einer weiteren Ausführungsform der Erfindung erfolgt das Sperren des Zugangs der Komponente zu der gemeinsam genutzten Ressource durch Absetzen eines Unterbrechungssignals an ein Betriebssystem, wobei das Betriebssystem bei Erhalten des Unterbrechungssignals für die Komponente oder einen Rechenvorgang einen Zugang zu der gemeinsam genutzten Ressource sperrt.

Das Betriebssystem kann dabei ausgeführt sein, Rechenvorgänge auf den Komponenten zu steuern. Demnach ist das Betriebssystem auch in der Lage, die Abarbeitung eines Rechenvorgangs auf einer Komponente, beispielsweise einem Prozessorkern eines Mehrkernprozessors, zu unterbrechen und fortzusetzen gemäß der Zuteilung des Bussystems an einen der Prozessorkerne.

Gemäß einer weiteren Ausführungsform der Erfindung weist das Verfahren wie oben und im Folgenden beschrieben weiterhin folgenden Schritt auf: Aufheben der Sperre des Zugangs der Komponente zu der gemeinsam genutzten Ressource, wobei das Aufheben der Sperre erfolgt, nachdem der Zugang zu der gemeinsam genutzten Ressource der Komponente entzogen wurde.

Das Aufheben der Sperre kann beispielsweise dadurch erfolgen, dass die Aktivitätsanzahl der gesperrten Komponente auf den Ausgangswert zurückgesetzt wird, so dass die Komponente in einem folgenden Vergabezyklus der Ressource bei der Vergabe erneut berücksichtigt werden kann.

Selbstverständlich kann die Sperre einer Komponente von der Nutzung der Ressource auch erst nach einer festgelegten Anzahl von Vergabezyklen aufgehoben werden. Dies stellt sicher, dass eine Komponente nicht in mehreren aufeinander folgenden Vergabezyklen die Ressource nutzt.

Damit bewirkt das Verfahren wie oben und im Folgenden beschrieben nicht, dass die Zuweisungsreihenfolge einer gemeinsam genutzten Ressource an die Komponenten festgelegt wird, sondern das Verfahren ermöglicht es lediglich einer Zuweisungsstrategie, eine Neuzuweisung der Ressource durch Unterbrechung der aktuell nutzenden Komponente zu ermöglichen. Insbesondere kann dann im nächsten Vergabezyklus die Entscheidung darüber, welche Komponente die Ressource erhält, bei der Zuweisungsstrategie liegen.

Gemäß einem weiteren Aspekt der Erfindung ist ein Computerprogrammelement zur Steuerung eines Rechensystems wie oben und im Folgenden beschrieben angegeben, welches ausgeführt ist, das Verfahren wie oben und im Folgenden beschrieben durchzuführen, wenn das Computerprogrammelement auf einem Prozessor einer Recheneinheit ausgeführt wird.

Insbesondere ist das Computerprogrammelement ausgeführt, auf einem Mehrkernprozessor einer Recheneinheit ausgeführt zu werden. Bei Ausführung auf einem Mehrkernprozessor ermöglicht das Computerprogrammelement die Beeinflussung der Zuweisung eines prozessorinternen Bussystems an die Prozessorkerne des Mehrkernprozessors.

Gemäß einem weiteren Aspekt der Erfindung ist ein computerlesbares Medium angegeben, auf dem ein Computerprogrammelement wie oben und im Folgenden beschrieben gespeichert ist.

Ein computerlesbares Medium kann dabei jedes flüchtige oder nicht flüchtige Speichermedium sein, beispielsweise eine Festplatte, eine CD, eine DVD, eine Diskette, eine Speicherkarte oder jedes beliebige andere computerlesbare Medium bzw. Speichermedium.

Im Folgenden werden mit Verweis auf die Figuren Ausführungsbeispiele der Erfindung beschrieben.

### KURZE BESCHREIBUNG DER FIGUREN

Fig. 1 zeigt ein Rechensystem gemäß einem Ausführungsbeispiel der Erfindung.
Fig. 2 zeigt einen Mehrkernprozessor gemäß einem Ausführungsbeispiel der Erfindung.
Fig. 3 zeigt eine Aktivitätsüberwachungseinheit für ein Rechensystem gemäß einem Ausführungsbeispiel der Erfindung.
Fig. 4 zeigt ein Luftfahrzeug mit einem Rechensystem gemäß einem Ausführungsbeispiel der Erfindung.
Fig. 5 zeigt einen schematischen Ablaufplan eines Verfahrens gemäß einem Ausführungsbeispiel der Erfindung.
Fig. 6 zeigt ein computerlesbares Medium gemäß einem Ausführungsbeispiel der Erfindung.

### DETAILLIERTE BESCHREIBUNG VON AUSFÜHRUNGSBEISPIELEN

Die Darstellungen in den Figuren sind schematisch und nicht maßstabsgetreu.

Werden in der folgenden Figurenbeschreibung gleiche Bezugsziffern verwendet, so betreffen diese gleiche oder ähnliche Elemente.

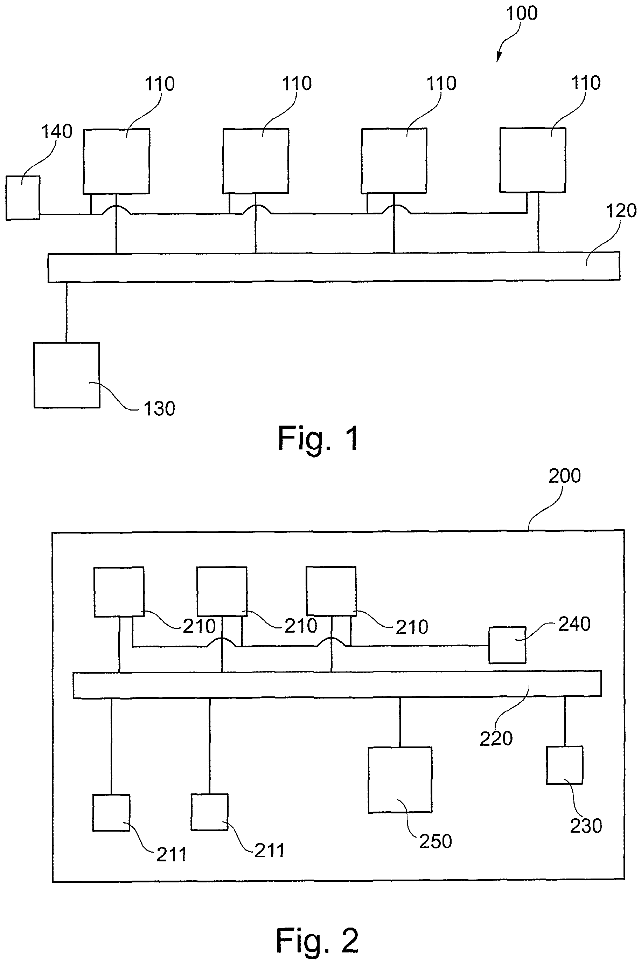

Fig. 1 zeigt ein Rechensystem 100 mit vier Komponenten 110, beispielsweise Rechnern bzw. Computern, welche über eine gemeinsame Ressource 120, beispielsweise ein Bussystem oder eine Netzwerkverbindung, Daten senden und empfangen können. Weiterhin weist das Rechensystem 100 eine Aktivitätsüberwachungseinheit 130 und eine Unterbrechungseinheit 140 auf.

Die Aktivitätsüberwachungseinheit 130 ist ausgeführt, die Anzahl der Aktivitäten der Komponenten 110 auf dem gemeinsamen Übertragungsmedium 120 zu erfassen. Die erfasste Anzahl von Aktivitäten einer Komponente 110 wird mit einem Aktivitätsgrenzwert abgeglichen und im Falle, dass die Aktivitätsanzahl dem Aktivitätsgrenzwert entspricht, wird diejenige Komponente 110, welche das Übertragungsmedium 120 nutzt, mittels der Unterbrechungseinheit 140 von der Nutzung des Bussystems 120 ausgeschlossen bzw. der Zugang der nutzenden Komponente 110 zu dem Übertragungsmedium 120 unterbrochen.

Fig. 2 zeigt einen Mehrkernprozessor 200 mit drei Prozessorkernen 210, zwei Ein-/Ausgabeeinheiten 211 und einem Speicher 250, welche über einen gemeinsam nutzbaren prozessorinternen Bus 220 miteinander so verbunden sind, dass ein lesender und schreibender Datenaustausch zwischen den genannten Elementen erfolgen kann. Eine Aktivitätsüberwachungseinheit 230, beispielsweise eine sog. Debug-Einheit, überwacht die Aktivität der Prozessorkerne bzw. der Ein-/Ausgabeeinheiten auf dem prozessorinternen Bussystem 220 und erfasst die Anzahl der Aktivitäten derjenigen Einheit, welche gerade das Bussystems 220 nutzt.

Daneben enthält der Mehrkernprozessor 200 eine Unterbrechungseinheit 240, welche ausgeführt ist, den Zugang einer Komponente, d. h. eines Prozessorkerns 210, zu dem Bussystem 220 zu unterbrechen.

Auch wenn die Unterbrechungseinheit 240 gemäß Fig. 2 ausgeführt ist, lediglich den Zugang der Prozessorkerne zu dem Bussystem 220 zu unterbrechen, kann die Unterbrechungseinheit auch ausgeführt sein, den Zugang der Ein-/Ausgabeeinheiten 211 zu dem Bussystem 220 zu unterbrechen.

Bei der Unterbrechungseinheit 240 kann es sich beispielsweise auch um eine sog. Interrupt-Funktion eines Betriebssystems handeln, welches auf dem Mehrkernprozessor 200 abläuft.

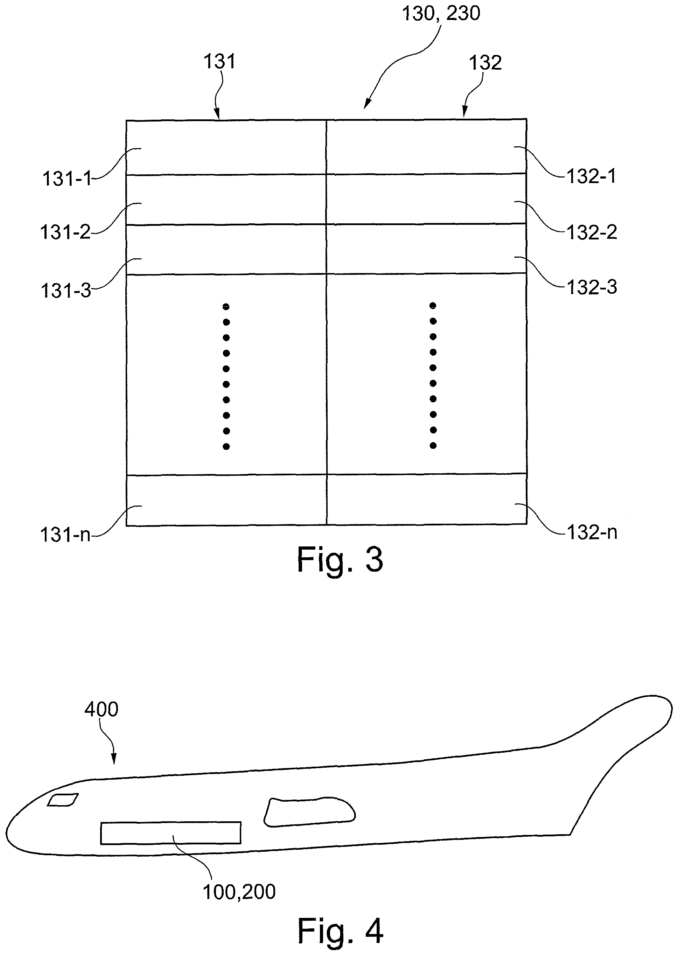

Fig. 3 zeigt eine Aktivitätsüberwachungseinheit 130, 230 mit einer ersten Gruppe von Speicherzellen 131 und einer zweiten Gruppe von Speicherzellen 132. Die erste Gruppe von Speicherzellen 131 weist eine Vielzahl von Speicherzellen auf, wobei jede einzelne Speicherzelle der ersten Gruppe ausgeführt ist, die Anzahl der Aktivitäten von jeweils einer Komponente der Vielzahl von Komponenten aufzunehmen, d. h. die Aktivitäten der Rechner, der Prozessorkerne oder der Ein-/Ausgabeeinheiten. Weiterhin ist jeweils eine Speicherzelle der zweiten Gruppe von Speicherzellen ausgeführt, einen Aktivitätsgrenzwert für jede der oben genannten Komponenten zu enthalten.

Die erste Gruppe von Speicherzellen 131 enthält eine erste Speicherzelle 131-1, welche die Anzahl von Aktivitäten einer ersten Komponente aufnimmt. Daneben sind weitere Speicherzellen in der ersten Gruppe von Speicherzellen aufgeführt, welche ebenfalls einen Wert der Anzahl von Aktivitäten einer weiteren Komponente aufnehmen können. Dabei sind die Speicherzellen 131-2, 131-3 bis hin zu 131-n jeweils einer Komponente 110, 210, 211 zugewiesen.

Sinngemäß die gleichen Ausführungen gelten für die Speicherzellen 132-1, 132-2, 132-3 bis hin zu 132-n, welche ausgeführt sind jeweils einen Aktivitätsgrenzwert für jeweils eine Komponente 110, 210, 211 aufzunehmen.

Wie der schematischen Darstellung in Fig. 3 zu entnehmen ist, ist sowohl die Anzahl der Komponenten 110, 210, 211 als auch die Anzahl der Speicherzellen der ersten Gruppe und der zweiten Gruppe auf eine beliebige Zahl festlegbar.

Ebenso kann die erste Gruppe von Speicherzellen 131 so ausgeführt sein, dass diese Gruppe nur eine Speicherzelle 131-1 aufweist, welche Speicherzelle 131-1 dann die Anzahl der Aktivitäten derjenigen Komponente aufnimmt, welche jeweils das Übertragungsmedium 120, 220 nutzt. Daneben kann die zweite Gruppe von Speicherzellen 132 so ausgeführt sein, dass dennoch jede Komponente 110, 210, 211 einen eigenen Aktivitätsgrenzwert erhält, d. h. dass jede Komponente 110, 210, 211 einen eigens einstellbaren Aktivitätsgrenzwert haben kann.

Fig. 4 zeigt ein Luftfahrzeug 400 mit einem Rechensystem 100, 200, wobei das Rechensystem ausgeführt ist, deterministisch abzuarbeitende Funktionen in dem Flugzeug durchzuführen.

Bei den deterministisch abzuarbeitenden Funktionen kann es sich insbesondere um die Übertragung von Sensorsignalen und Steuersignalen in dem Flugzeug handeln, es können aber auch beispielsweise Multimediasignale von dem Rechensystem übertragen werden.

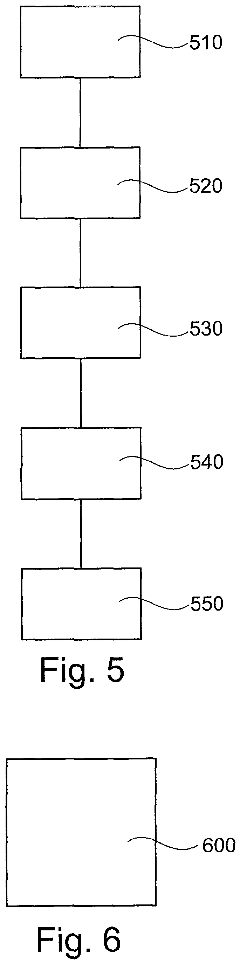

Fig. 5 zeigt die schematische Wiedergabe eines Verfahrens zur Beeinflussung der exklusiven Zuweisung einer gemeinsam genutzten Ressource in einem Rechensystem an eine Komponente einer Vielzahl von Komponenten, welche ausgeführt sind, die Ressource zu nutzen, wobei die Zuweisung der Ressource an die Komponente nach einer beliebigen festgelegten Zuweisungsstrategie erfolgt.

In einem ersten Schritt 510 erfolgt das Festlegen eines Aktivitätsgrenzwertes, welcher die maximale Anzahl von Aktivitäten der Komponente auf der gemeinsam genutzten Ressource angibt.

In einem zweiten Schritt 520 erfolgt das Überwachen einer Anzahl von Aktivitäten der Komponente auf der gemeinsam genutzten Ressource.

In einem dritten Schritt 530 erfolgt die Anpassung des Aktivitätsgrenzwertes während der Durchführung des Verfahrens, d. h. beispielsweise während einer Betriebszeit eines Rechensystems, auf dem das Verfahren wie oben und im Folgenden beschrieben ausgeführt wird.

In einem vierten Schritt 540 erfolgt das Sperren des Zugangs der Komponente zu der gemeinsam genutzten Ressource, wenn die Anzahl der Aktivitäten den festgelegten Aktivitätsgrenzwert erreicht hat, so dass die Zuweisungsstrategie die gemeinsam genutzte Ressource einer anderen Komponente zuweisen kann. Natürlich kann die Zuweisung der gemeinsam genutzten Ressource erneut an diejenige Komponente erfolgen, welche die Ressource im letzten Vergabezyklus genutzt hat.

In einem fünften Schritt 550 erfolgt das Aufheben der Sperre des Zugangs der Komponente zu der gemeinsam genutzten Ressource.

Das Aufheben der Sperre des Zugangs kann damit sowohl vor Beginn des nächsten Vergabezyklusses beginnen, d. h. dass die soeben nutzende Komponente die Ressource erneut erhalten kann, als auch erst nach Beginn des nächsten Vergabezyklusses erfolgen, so dass die soeben nutzende Komponente die Ressource in dem nächsten Vergabezyklus nicht erhalten kann.

Ebenso kann das Aufheben der Sperre des Zugangs der Komponente zu der Ressource erst nach einer festgelegten Anzahl von Vergabezyklen erfolgen.

Fig. 6 zeigt ein computerlesbares Medium 600, auf dem ein Computerprogrammelement zur Steuerung eines Rechensystems wie oben und im Folgenden beschrieben gespeichert ist, welches Computerprogrammelement ausgeführt ist, das Verfahren wie oben und im Folgenden beschrieben durchzuführen, wenn es auf einem Prozessor einer Recheneinheit ausgeführt wird.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Rechensystem (100) mit einer Vielzahl von Komponenten (110), welche ausgeführt sind, ein Übertragungsmedium (120) gemeinsam zu nutzen,
wobei jede einzelne Komponente ausgeführt ist, das Übertragungsmedium zu nutzen und wobei zu einem gegebenen Zeitpunkt lediglich eine Komponente das Übertragungsmedium nutzen kann, wobei das Rechensystem ausgeführt ist, eine Zuweisungsstrategie auszuführen, welche das Übertragungsmedium an eine Komponente zuweist, das Rechensystem (100) aufweisend:
eine Aktivitätsüberwachungseinheit (130), welche ausgeführt ist, eine Anzahl von Aktivitäten einer Komponente auf dem Übertragungsmedium zu erfassen;
wobei eine Aktivität einer Komponente auf dem Übertragungsmedium eine Übertragung eines Datenpakets ist und wobei der Aktivitätsgrenzwert eine vorgegebene Anzahl von Datenpaketen ist;
**dadurch gekennzeichnet, dass** das Rechensystem eine Unterbrechungseinheit (140) aufweist, welche ausgeführt ist, die Nutzung des Übertragungsmediums durch eine das Übertragungsmedium nutzende Komponente zu unterbrechen, wenn die Anzahl der Aktivitäten der Komponente einen Aktivitätsgrenzwert erreicht;
die Zuweisungsstrategie ausgeführt ist, zu erkennen, dass das Übertragungsmedium nicht genutzt ist, wenn die Nutzung des Übertragungsmediums durch eine Komponente unterbrochen ist, und das Übertragungsmedium einer derjenigen Komponenten zur Nutzung zuzuweisen, welche das Übertragungsmedium nutzen wollen.

2. Rechensystem nach Anspruch 1,
wobei das Rechensystem ein Mehrkernprozessor (200) ist.

3. Rechensystem nach Anspruch 2,
wobei wenigstens eine Komponente ein Prozessorkern (210) des Mehrkernprozessors ist.

4. Rechensystem nach Anspruch 2 oder 3,
wobei wenigstens eine Komponente eine Ein-/Ausgabeeinheit (211) des Mehrkernprozessors ist.

5. Rechensystem nach einem der vorhergehenden Ansprüche,
wobei die Aktivitätsüberwachungseinheit eine erste Gruppe von Speicherzellen (131) aufweist;
wobei jeweils eine Speicherzelle der ersten Gruppe ausgeführt ist, die Anzahl von Aktivitäten von jeweils einer Komponente der Vielzahl von Komponenten zu speichern.

6. Rechensystem nach einem der vorhergehenden Ansprüche,
wobei die Aktivitätsüberwachungseinheit eine zweite Gruppe von Speicherzellen (132) aufweist;
wobei jeweils eine Speicherzelle der zweiten Gruppe ausgeführt ist, den Aktivitätsgrenzwert von jeweils einer Komponente der Vielzahl von Komponenten zu speichern.

7. Luftfahrzeug (400) mit einem Rechensystem (100, 200) nach einem der vorhergehenden Ansprüche.

8. Verfahren zum Beeinflussen der exklusiven Zuweisung eines gemeinsam genutzten Übertragungsmediums (120, 220) in einem Rechensystem (100) an eine Komponente (110) einer Vielzahl von Komponenten oder an einen Rechenvorgang, welche ausgeführt sind, das Übertragungsmedium zu nutzen,
wobei die Zuweisung des Übertragungsmediums (120, 220) an die Komponente (110) nach einer beliebigen festgelegten Zuweisungsstrategie in dem Rechensystem erfolgt;
das Verfahren aufweisend die Schritte:
Festlegen (510) eines Aktivitätsgrenzwertes, welcher die maximale Anzahl von Aktivitäten der Komponente oder des Rechenvorgangs auf dem gemeinsam genutzten Übertragungsmedium angibt;
Überwachen (520) einer Anzahl von Aktivitäten der Komponente oder des Rechenvorgangs auf dem gemeinsam genutzten Übertragungsmedium;
wobei eine Aktivität einer Komponente auf dem Übertragungsmedium eine Übertragung eines Datenpakets ist und wobei der Aktivitätsgrenzwert eine vorgegebene Anzahl von Datenpaketen ist;
**dadurch gekennzeichnet, dass** das Verfahren weiterhin aufweist:
Unterbrechen (540) der Nutzung des Übertragungsmediums durch eine das Übertragungsmedium nutzende Komponente oder des Rechenvorgangs, wenn die Anzahl der Aktivitäten den festgelegten Aktivitätsgrenzwert erreicht hat;
Erkennen, durch die Zuweisungsstrategie, dass das Übertragungsmedium nicht genutzt ist, wenn die Nutzung des Übertragungsmediums durch eine Komponente unterbrochen wurde, und Zuweisen des Übertragungsmediums zur Nutzung durch eine derjenigen Komponenten, welche das Übertragungsmedium nutzen wollen.

9. Verfahren nach Anspruch 8,
wobei das Festlegen des Aktivitätsgrenzwertes für jede Komponente oder für jeden Rechenvorgang auf einen Wert erfolgt, welcher sich während einer Betriebszeit des Verfahrens nicht verändert.

10. Verfahren nach einem der Ansprüche 8 bis 9,
wobei das Sperren des Zugangs der Komponente oder des Rechenvorgangs zu dem gemeinsam genutzten Übertragungsmedium durch Absetzen eines Unterbrechungssignals an ein Betriebssystem erfolgt;
wobei das Betriebssystem bei Erhalten des Unterbrechungssignals für die Komponente oder den Rechenvorgang einen Zugang der Komponente zu dem gemeinsam genutzten Übertragungsmedium sperrt.

11. Computerprogrammelement zur Steuerung eines Rechensystems nach einem der Ansprüche 1 bis 6, welches ausgeführt ist, das Verfahren nach einem der Ansprüche 8 bis 10 durchzuführen, wenn es auf einem Prozessor einer Recheneinheit ausgeführt wird.

12. Computerlesbares Medium (600), auf dem ein Computerprogrammelement nach Anspruch 11 gespeichert ist.

## Claims

1. Computing system (100) having a multiplicity of components (110) which are designed to share a transmission medium (120),
wherein each individual component is designed to use the transmission medium, and wherein only one component can use the transmission medium at a given time, wherein the computing system is designed to carry out an allocation strategy which allocates the transmission medium to a component, the computing system (100) having:
an activity monitoring unit (130) which is designed to capture a number of activities of a component on the transmission medium;
wherein an activity of a component on the transmission medium is transmission of a data packet, and wherein the activity limit value is a predefined number of data packets;
**characterized in that** the computing system has an interruption unit (140) which is designed to interrupt the use of the transmission medium by a component using the transmission medium if the number of activities of the component reaches an activity limit value;
the allocation strategy is designed to detect that the transmission medium is not being used when the use of the transmission medium by a component has been interrupted and to allocate the transmission medium to one of those components wishing to use the transmission medium.

2. Computing system according to Claim 1,
wherein the computing system is a multi-core processor (200).

3. Computing system according to Claim 2,
wherein at least one component is a processor core (210) of the multi-core processor.

4. Computing system according to Claim 2 or 3,
wherein at least one component is an input/output unit (211) of the multi-core processor.

5. Computing system according to one of the preceding claims,
wherein the activity monitoring unit has a first group of memory cells (131);
wherein one memory cell in the first group is designed to store the number of activities of one component of the multiplicity of components in each case.

6. Computing system according to one of the preceding claims,
wherein the activity monitoring unit has a second group of memory cells (132);
wherein one memory cell in the second group is designed to store the activity limit value of one component of the multiplicity of components in each case.

7. Aircraft (400) having a computing system (100, 200) according to one of the preceding claims.

8. Method for influencing the exclusive allocation of a shared transmission medium (120, 220) in a computing system (100) to a component (110) of a multiplicity of components or to a computing operation which are designed to use the transmission medium,
wherein the transmission medium (120, 220) is allocated to the component (110) according to an arbitrary stipulated allocation strategy in the computing system;
the method having the steps of:
stipulating (510) an activity limit value which indicates the maximum number of activities of the component or of the computing operation on the shared transmission medium;
monitoring (520) a number of activities of the component or of the computing operation on the shared transmission medium;
wherein an activity of a component on the transmission medium is transmission of a data packet, and wherein the activity limit value is a predefined number of data packets;
**characterized in that** the method also comprises:
interrupting (540) the use of the transmission medium by a component using the transmission medium or the computing operation if the number of activities has reached the stipulated activity limit value;
detecting, by means of the allocation strategy, that the transmission medium is not being used when the use of the transmission medium by a component has been interrupted, and allocating the transmission medium for use by one of those components wishing to use the transmission medium.

9. Method according to Claim 8,
wherein the activity limit value for each component or for each computing operation is stipulated at a value which does not change during an operating time of the method.

10. Method according to one of Claims 8 to 9,
wherein access of the component or of the computing operation to the shared transmission medium is blocked by transmitting an interrupt signal to an operating system;
wherein the operating system blocks access of the component to the shared transmission medium upon receiving the interrupt signal for the component or the computing operation.

11. Computer program element for controlling a computing system according to one of Claims 1 to 6, which is designed to carry out the method according to one of Claims 8 to 10 when it is executed on a processor of a computing unit.

12. Computer-readable medium (600) which stores a computer program element according to Claim 11.

## Revendications

1. Système informatique (100) comprenant une pluralité de composants (110) conçus pour utiliser en commun un support de transmission (120),
dans lequel chaque composant individuel est conçu pour utiliser le support de transmission et dans lequel, à un instant donné, seul un composant peut utiliser le support de transmission, dans lequel le système informatique est conçu pour mettre en oeuvre une stratégie d'allocation qui alloue le support de transmission à un composant, le système informatique (100) comprenant :
une unité de surveillance d'activité (130) conçue pour détecter une pluralité d'activités d'un composant sur le support de transmission ;
dans lequel une activité d'un composant sur le support de transmission est une transmission d'un paquet de données, et dans lequel la valeur limite d'activité est un nombre prédéterminé de paquets de données ;
**caractérisé en ce que** le système informatique comprend une unité d'interruption (140) conçue pour interrompre l'utilisation du support de transmission par un composant utilisant le support de transmission lorsque le nombre d'activités du composant atteint une valeur limite d'activité ;
**en ce que** la stratégie d'affectation est mise en oeuvre pour déterminer que le support de transmission n'est pas utilisé lorsque l'utilisation du support de transmission est interrompue par un composant, et pour allouer le support de transmission en vue de son utilisation à l'un des composants qui souhaitent utiliser le support de transmission.

2. Système informatique selon la revendication 1, dans lequel le système informatique est un processeur multicoeurs (200).

3. Système informatique selon la revendication 2, dans lequel au moins un composant est un coeur de processeur (210) du processeur multicoeurs.

4. Système informatique selon la revendication 2 ou 3,
dans lequel au moins un composant est une unité d'entrée/sortie (211) du processeur multicoeurs.

5. Système informatique selon l'une des revendications précédentes, dans lequel l'unité de surveillance d'activité comporte un premier groupe de cellules de mémoire (131) ;
dans lequel chacune des cellules de mémoire du premier groupe est conçue pour stocker le nombre d'activités d'un composant respectif de la pluralité de composants.

6. Système informatique selon l'une des revendications précédentes,
dans lequel l'unité de surveillance d'activité comprend un second groupe de cellules de mémoire (132) ;
dans lequel une cellule de mémoire respective du second groupe est conçue pour stocker la valeur limite d'activité d'un composant respectif de la pluralité de composants.

7. Aéronef (400) comportant un système informatique (100, 200) selon l'une quelconque des revendications précédentes.

8. Procédé pour influencer l'allocation exclusive d'un support de transmission utilisé en commun (120, 220) dans un système informatique (100) à un composant (110) d'une pluralité de composants ou à un processus informatique, qui sont exécutés pour utiliser le support de transmission,
dans lequel l'allocation du support de transmission (120, 220) au composant (110) est effectuée selon une stratégie d'allocation quelconque fixée dans le système informatique ;
le procédé comprenant les étapes consistant à :
fixer (510) une valeur limite d'activité indiquant le nombre maximal d'activités du composant ou du processus informatique sur le support de transmission utilisé en commun ;
surveiller (520) une pluralité d'activités du composant ou du processus informatique sur le support de transmission utilisé en commun ;
dans lequel une activité d'un composant sur le support de transmission est une transmission d'un paquet de données, et dans lequel la valeur limite d'activité est un nombre prédéterminé de paquets de données ;
**caractérisé en ce que** le procédé consiste en outre à :
interrompre (540) l'utilisation du support de transmission par un composant utilisant le support de transmission ou le processus informatique lorsque le nombre d'activités a atteint la valeur limite d'activité fixée ;
détecter, par l'intermédiaire de la stratégie d'allocation, que le support de transmission n'est pas utilisé lorsque l'utilisation du support de transmission a été interrompue par un composant, et allouer le support de transmission en vue d'une utilisation par l'un des composants qui souhaitent utiliser le support de transmission.

9. Procédé selon la revendication 8, dans lequel la fixation de la valeur limite d'activité pour chaque composant ou pour chaque processus informatique est effectuée à une valeur qui ne varie pas pendant une période de fonctionnement du procédé.

10. Procédé selon l'une quelconque des revendications 8 à 9, dans lequel le blocage de l'accès du composant ou du processus informatique au support de transmission utilisé en commun est effectué en envoyant un signal d'interruption à un système d'exploitation ; dans lequel le système d'exploitation, après réception du signal d'interruption destiné au composant ou au processus informatique, bloque un accès du composant au support de transmission utilisé en commun.

11. Élément de programme d'ordinateur destiné à commander un système informatique selon l'une quelconque des revendications 1 à 6, qui est conçu pour mettre en oeuvre le procédé selon l'une quelconque des revendications 8 à 10 lorsqu'il est exécuté sur un processeur d'une unité informatique.

12. Support lisible par ordinateur (600) sur lequel est stocké un élément de programme d'ordinateur selon la revendication 11.
